# NEUE EUROPÄISCHE PATENTSCHRIFT

(11) **EP 3 181 910 B2**
(45) Veröffentlichungstag und Bekanntmachung des Hinweises auf die Entscheidung über den Einspruch: **01.10.2025**
(45) Hinweis auf die Patenterteilung: 09.09.2020
(21) Anmeldenummer: 16002600.1
(22) Anmeldetag: 07.12.2016
(51) Int. Cl.: F04D 29/28, F02B 63/02, H02K 7/18, F04D 29/62, F04D 29/66, F01P 1/02, H02K 21/22, H02K 9/06, F04D 25/08, F16F 15/315, H02K 7/02

(54) **GEBLÄSERAD UND ARBEITSGERÄT MIT EINEM VERBRENNUNGSMOTOR UND EINEM SOLCHEN GEBLÄSERAD**
IMPELLER AND TOOL WITH A COMBUSTION ENGINE AND SAID IMPELLER
ROUE DE VENTILATEUR ET ENGIN DE TRAVAIL COMPRENANT UN MOTEUR À COMBUSTION INTERNE ET LADITE ROUE DE VENTILATEUR

(30) Priorität: 15.12.2015 DE 102015016482
(43) Veröffentlichungstag der Anmeldung: 21.06.2017
(73) Patentinhaber: Andreas Stihl AG & Co. KG, 71336 Waiblingen (DE)
(72) Erfinder: Wolf, Andreas, 71397 Leutenbach (DE); Weissert, Wolfgang, 71364 Winnenden (DE); Lempges, Volker, 54619 Eschfeld (DE); Zimmermann, Helmut, 73663 Berglen (DE); Wolf, Günter, 71570 Oppenweiler (DE); Vollmer, Holger, 78247 Hilzingen (DE); Förster, Marcel, 71409 Schwaikheim (DE); Dawin, Ute, 71336 Waiblingen (DE); Lank, Jonas, 71364 Winnenden (DE)
(74) Vertreter: Reinhardt, Annette

(56) Entgegenhaltungen:
- EP-A2- 1 717 441
- DE-A1- 102007 037 581
- DE-A1- 102012 107 131
- JP-A- 2014 114 769
- JP-A- H0 538 111
- TW-A- 201 507 758
- US-A- 2 778 961
- US-A- 3 952 712
- US-A- 4 115 716
- US-A- 4 423 345
- US-A- 4 709 669
- US-A- 5 375 637
- US-A1- 2005 046 191
- US-A1- 2005 126 529
- US-A1- 2006 022 540
- US-A1- 2015 130 307

## Beschreibung

Die Erfindung betrifft ein Gebläserad nach dem Oberbegriff des Anspruchs 1 und ein Arbeitsgerät mit einem Verbrennungsmotor und mit einem Gebläserad.

Gebläseräder werden beispielsweise bei Verbrennungsmotoren zur Förderung der Kühlluft eingesetzt. Hierzu wird üblicherweise ein Gebläserad drehfest an der Kurbelwelle des Verbrennungsmotors festgelegt. Ein solches Gebläserad dient üblicherweise gleichzeitig als Schwungrad für den Verbrennungsmotor.

Aus der DE 10 2007 037 581 A1 geht ein Verbrennungsmotor in einem handgeführten, tragbaren Arbeitsgerät hervor, an dessen Kurbelwelle ein Gebläserad festgelegt ist. In das Gebläserad ist der Rotor eines Wechselstromgenerators integriert. Der Wechselstromgenerator erzeugt im Betrieb Energie, mit der mindestens ein elektrischer Verbraucher des Arbeitsgeräts, insbesondere eine Zündkerze des Arbeitsgeräts, mit Energie versorgt wird.

Aus der US 5,375,637 A ist eine handgeführte Oberfräse mit einem Gebläserad aus Kunstharz bekannt, auf dem zum Ausgleich des Gewichtsverlusts gegenüber einem herkömmlichen Gebläserad aus Aluminium ein Trägheitsring angebracht ist.

Aus der DE 10 2012 107 131 A1 ist ein Wäschetrockner mit einem Gebläserad bekannt, auf dem ein Inertialgewicht angeordnet ist.

Um einen gleichmäßigen Lauf des Verbrennungsmotors zu erreichen, ist eine hohe Schwungmasse für das als Schwungrad dienende Gebläserad wünschenswert. Gleichzeitig soll das Gesamtgewicht des Verbrennungsmotors und damit auch des Gebläserads insbesondere für den Einsatz in einem Arbeitsgerät, das im Betrieb vom Bediener getragen wird, möglichst niedrig sein, um ein ergonomisches Arbeiten zu ermöglichen.

Der Erfindung liegt die Aufgabe zugrunde, ein Gebläserad der gattungsgemäßen Art zu schaffen, das einen gleichmäßigen Lauf eines Verbrennungsmotors bei geringem Gesamtgewicht ermöglicht. Eine weitere Aufgabe der Erfindung besteht darin, ein Arbeitsgerät mit einem Verbrennungsmotor mit einem Gebläserad zu schaffen, das ein geringes Gesamtgewicht besitzt und dessen Verbrennungsmotor gleichmäßig läuft.

Diese Aufgabe wird bezüglich des Gebläserads durch ein Gebläserad mit den Merkmalen des Anspruchs 1 gelöst. Bezüglich des Arbeitsgeräts wird die Aufgabe durch ein Arbeitsgerät mit den Merkmalen des Anspruchs 16 gelöst.

Beim erfindungsgemäßen Gebläserad ist vorgesehen, dass am Grundkörper des Gebläserads ein Trägheitsring fixiert ist. Der Trägheitsring besteht aus einem Material, dessen Dichte größer als die Dichte des Materials des Grundkörpers des Gebläserads ist. Der Grundkörper des Gebläserads kann aus einem Material mit vergleichsweise geringer Dichte bestehen. Dadurch wird ein geringes Gesamtgewicht des Gebläserads erreicht. Um dennoch ein gleichmäßiges Laufverhalten eines Verbrennungsmotors, an dem das Gebläserad montiert ist, zu erreichen, ist der Trägheitsring aus einem Material mit größerer Dichte vorgesehen. Dadurch ergibt sich ein höheres Trägheitsmoment. Dadurch ergibt sich ein gleichmäßigeres Laufverhalten des Gebläserads. Weiterhin besitzt das Gebläserad bei einer Rotation eine größere Rotationsenergie. Dadurch ist die Verwendung des Gebläserads als Schwungrad begünstigt. Aufgrund der größeren Dichte des Materials des Trägheitsrings kann der Trägheitsring bei kleinem Volumen eine große Masse besitzen. Dadurch ist eine Einsparung von Bauraum möglich. Dadurch kann das Trägheitsmoment des Gebläserads durch den Trägheitsring unter Verwendung eines lediglich kleinen Bauraums vergrößert werden. Erfindungsgemäß ist der Trägheitsring in einem Abstand zu dem mindestens einen Magneten fixiert. Dadurch wird eine Beeinflussung des Magnetfeldes des mindestens einen Magneten durch den Trägheitsring weitgehend oder vollständig vermieden. Durch den Trägheitsring wird kein magnetischer Rückschluss erzeugt.

Erfindungsgemäß ist vorgesehen, dass das Gebläserad zusätzlich zum Trägheitsring einen metallischen Rückschlussring zur Verstärkung des magnetischen Flusses des mindestens einen Magneten aufweist. Der Trägheitsring kann unabhängig vom metallischen Rückschlussring auf dem Grundkörper des Gebläserads positioniert werden. Die Form des Trägheitsrings kann beispielsweise an den vorhandenen Bauraum angepasst sein. Die Form des Trägheitsrings kann unabhängig von der Form des Rückschlussrings gestaltet sein.

Erfindungsgemäß ist vorgesehen, dass der Trägheitsring radial außerhalb des Rückschlussrings angeordnet ist. Dadurch ergibt sich ein großes Trägheitsmoment des Gebläserads. Da der radiale Abstand eines Massepunktes von der Drehachse quadratisch in die Berechnung der Größe des Trägheitsmoments eingeht, ist eine Anordnung der Massepunkte des Trägheitsrings radial außerhalb des Rückschlussrings besonders günstig. Dadurch kann bei vergleichsweise geringem Gesamtgewicht des Gebläserads ein großes Trägheitsmoment des Gebläserads erreicht werden.

Erfindungsgemäß ist vorgesehen, dass der Grundkörper an einer Seite eine Ringwand aufweist. Die Ringwand verläuft ringförmig um die Drehachse. Der mindestens eine Magnet ist radial innerhalb der Ringwand angeordnet. Erfindungsgemäß trennt die Ringwand den Trägheitsring von dem mindestens einen Magneten. Der Trägheitsring ist radial außerhalb der Ringwand angeordnet. Vorteilhaft ist die Ringwand Teil einer Aufnahme für den Trägheitsring.

Der Grundkörper des Gebläserads besitzt eine erste und eine zweite Seite. Erfindungsgemäß sind auf der zweiten Seite Strömungsleitelemente angeordnet. Es kann vorgesehen sein, dass zusätzlich auch auf der ersten Seite des Grundkörpers des Gebläserads Strömungsleitelemente angeordnet sind. Vorteilhaft ist der Trägheitsring auf der ersten Seite des Gebläserads angeordnet. Die erste Seite des Gebläserads ist dabei bevorzugt die Seite, die bei der Montage des Gebläserads an der Kurbelwelle eines Verbrennungsmotors dem Kurbelgehäuse zugewandt liegt.

Die Strömungsleitelemente auf der zweiten Seite des Gebläserads sind insbesondere in einem Kreisringbereich des Grundkörpers angeordnet. Der Mittelpunkt des Kreisringbereichs liegt dabei vorteilhaft auf der Drehachse. Ein innerer Radius des Kreisringbereichs entspricht vorteilhaft höchstens dem 0,5fachen des Außenradius des Grundkörpers. Ein äußerer Radius des Kreisringbereichs entspricht insbesondere mindestens dem 0,9fachen des Außenradius des Grundkörpers. Dadurch erstrecken sich die Strömungsleitelemente in radialer Richtung über einen großen Teil des Grundkörpers. Der Kreisringbereich nimmt mehr als die Hälfte einer vom Außenradius des Grundkörpers begrenzten Kreisfläche ein. Dadurch können die Strömungsleitelemente bei Rotation des Gebläserads eine gute Kühlluftförderung erzielen.

Der Grundkörper besitzt eine gedachte Abschlussebene, die senkrecht zur Drehachse steht. Die Abschlussebene ist auf der ersten Seite des Grundkörpers angeordnet. Die Abschlussebene verläuft dabei durch die in axialer Richtung äußerste Begrenzung des Grundkörpers. Vorteilhaft besitzt der Grundkörper an der zweiten Seite des Grundkörpers eine Strömungsleitfläche. Die Strömungsleitfläche ist vorteilhaft so ausgebildet, dass der Abstand der Strömungsleitfläche von der Abschlussebene mit sich verringerndem Abstand der Strömungsleitfläche zur Drehachse zunimmt. Dadurch kann das Gebläserad im Betrieb von der zweiten Seite des Grundkörpers in axialer Richtung der Drehachse Luft ansaugen, die durch die Strömungsleitfläche in günstiger Weise in Richtung radial zur Drehachse umgeleitet wird. Dadurch kann eine vergleichsweise hohe Förderleistung des Gebläserads erreicht werden. Vorteilhaft ist vorgesehen, dass die Form der Strömungsleitfläche zumindest teilweise der Form einer Mantelfläche eines Kreiskegelstumpfs entspricht.

Die Kontur des Trägheitsrings folgt an der der Strömungsleitfläche zugewandten Seite vorteilhaft der Kontur der Strömungsleitfläche. Die Strömungsleitfläche ist vorteilhaft strömungsgünstig ausgebildet, und die Kontur des Trägheitsrings ist bevorzugt an die Kontur der Strömungsleitfläche angepasst. Dadurch kann der zur Verfügung stehende Bauraum gut genutzt und gleichzeitig ein hohes Trägheitsmoment des Schwungrads erreicht werden.

Vorteilhaft ist vorgesehen, dass zwischen der ersten Seite und der zweiten Seite des Grundkörpers eine Trennwand angeordnet ist. Der Trägheitsring ist vorteilhaft benachbart zu der Trennwand angeordnet. Bevorzugt folgt die Kontur des Trägheitsrings an der der Strömungsleitfläche zugewandten Seite der Kontur der Trennwand. Die benachbart zur Trennwand liegende Seite des Trägheitsrings verläuft vorteilhaft parallel zur Trennwand. Die Seite des Trägheitsrings verläuft dabei vorteilhaft geneigt zur Drehachse des Gebläserads, also unter einem Winkel von weniger als 90° zur Drehachse.

Die Trennwand begrenzt vorteilhaft mindestens zum Teil eine Aufnahme für den Trägheitsring. Vorteilhaft ist vorgesehen, dass die Strömungsleitfläche zumindest teilweise von der Trennwand des Grundkörpers gebildet ist. Vorteilhaft folgt eine Kontur der Trennwand auf der ersten Seite des Grundkörpers einer Kontur der Strömungsleitfläche auf der zweiten Seite des Grundkörpers. Dadurch ist eine in axialer Richtung gemessene Stärke der Trennwand zumindest im Bereich des Trägheitsrings konstant. Dadurch kann der Trägheitsring material- und gewichtssparend auf dem Grundkörper des Gebläserads angeordnet sein. Dies ist insbesondere bei der Verwendung des Gebläserads in einem handgeführten Arbeitsgerät vorteilhaft. Vorteilhaft liegt der Trägheitsring an der Trennwand an.

Vorteilhaft ist vorgesehen, dass die erste Seite des Grundkörpers eine Außenwand aufweist. Die Außenwand verläuft vorteilhaft ringförmig um die Drehachse entlang des Umfangs des Grundkörpers. Vorteilhaft begrenzt die Außenwand mindestens zum Teil die Aufnahme für den Trägheitsring.

Vorteilhaft ist vorgesehen, dass der äußere Radius des Trägheitsrings das 0,8fache bis 1,0fache des Außenradius des Grundkörpers beträgt. Dadurch ist die Masse des Trägheitsrings in einem radial weit außenliegenden Bereich des Grundkörpers des Gebläserads angeordnet. Dadurch ergibt sich bei vergleichsweise geringer Gesamtmasse des Gebläserads ein großes Trägheitsmoment des Gebläserads.

Vorteilhaft ist vorgesehen, dass der Trägheitsring mindestens einen Abschnitt besitzt, in dem eine in Richtung der Drehachse gemessene Stärke des Trägheitsrings radial nach außen hin abnimmt. Die Stärke des Trägheitsrings ist dabei in Richtung der Drehachse des Gebläserads gemessen. Durch die Ausbildung des Trägheitsrings als separates Bauteil, das vorteilhaft keine weitere Funktion als die Erhöhung des Trägheitsmoments erfüllt, können die Form des Trägheitsrings und insbesondere die Stärke des Trägheitsrings gut an den im Grundkörper des Gebläserads vorhandenen Bauraum angepasst werden. Durch die radial nach außen hin abnehmende Stärke des Trägheitsrings kann die Kontur einer dem Grundkörper zugewandten Seitenfläche des Trägheitsrings der Kontur der Trennwand auf der ersten Seite des Grundkörpers folgen. Dadurch kann der im Grundkörper zur Verfügung stehende Bauraum optimal ausgenutzt sein. Durch die radial nach außen hin abnehmende Stärke des Trägheitsrings kann eine dem Grundkörper abgewandte Seitenfläche des Trägheitsrings im eingebauten Zustand des Trägheitsrings in einer Ebene senkrecht zur Drehachse liegen. Dadurch kann eine kompakte und ansprechende Gestaltung des Gebläserads erreicht werden. Vorteilhaft bildet die ebene Seitenfläche des Trägheitsrings einen Teil der Außenseite des Gebläserads.

Vorteilhaft ist vorgesehen, dass die Stärke des Trägheitsrings am äußeren Radius des Trägheitsrings etwa 60% bis 80% der Stärke am inneren Radius des Trägheitsrings beträgt. Vorteilhaft ist vorgesehen, dass die dem Grundkörper zugewandte Seitenfläche des Trägheitsrings konisch verläuft. Vorteilhaft ist der Trägheitsring durch die Seitenfläche auf dem Grundkörper zentriert. Dadurch lässt sich der Trägheitsring auf einfache Weise auf dem Grundkörper anordnen. Gleichzeitig ist eine Anordnung des Trägheitsrings in einer exakt vorgegebenen Position auf dem Grundkörper des Gebläserads möglich. Dadurch ergibt sich ein gutes Laufverhalten des Gebläserads.

Vorteilhaft ist der Trägheitsring mit Klebstoff am Grundkörper befestigt. Dadurch ist die Befestigung des Trägheitsrings am Grundkörper auf einfache Weise möglich.

Für ein Arbeitsgerät mit einem Verbrennungsmotor ist vorgesehen, dass das Arbeitsgerät ein erfindungsgemäßes Gebläserad besitzt. Das Arbeitsgerät kann auch ein erfindungsgemäßes Gebläserad mit einer der angegebenen vorteilhaften Weiterbildungen oder mit einer beliebigen Kombination mehrerer der angegebenen vorteilhaften Weiterbildungen umfassen.

Vorteilhafte Gestaltungen können sich durch beliebige Kombinationen der Elemente der Ausführungsbeispiele ergeben.

Ausführungsbeispiele der Erfindung sind nachstehend anhand der Zeichnung näher erläutert. Es zeigen:
- Fig. 1: eine schematische Teildarstellung einer Seitenansicht einer Motorsäge,
- Fig. 2: eine schematische, perspektivische, teilgeschnittene Darstellung eines Verbrennungsmotors der Motorsäge nach Fig. 1,
- Fig. 3: eine schematische Darstellung eines Schnitts durch die Motorsäge aus Fig. 1,
- Fig. 4 und 5: Explosionsdarstellungen von Grundkörper, Trägheitsring und Rückschlussring eines Gebläserads der Motorsäge nach Fig. 1,
- Fig. 6: eine Seitenansicht des Gebläserads aus Fig. 4 in einer Richtung senkrecht zur Drehachse,
- Fig. 7: eine Seitenansicht des Gebläserads in Richtung des Pfeils VII in Fig. 6,
- Fig. 8: eine schematische Seitenansicht des Gebläserads in Richtung des Pfeils VIII in Fig. 6,
- Fig. 9: einen Schnitt entlang der Linie IX-IX in Fig. 8,
- Fig. 10: eine vergrößerte Teildarstellung der Schnittdarstellung aus Fig. 9,
- Fig. 11: eine Explosionsdarstellung des Gebläserads aus Fig. 4 und einer Start-einrichtung,
- Fig. 12: eine schematische Darstellung einer Koppeleinrichtung der Start-einrichtung und des Gebläserads nach Fig. 11,
- Fig. 13: einen Schnitt durch das Gebläserad und die Starteinrichtung aus Fig. 11 in zusammengebautem Zustand und
- Fig. 14: eine schematische Teildarstellung eines Schnitts senkrecht zur Drehachse durch einen Generator, den Rückschlussring und den Grundkörper des Gebläserads nach Fig. 4.

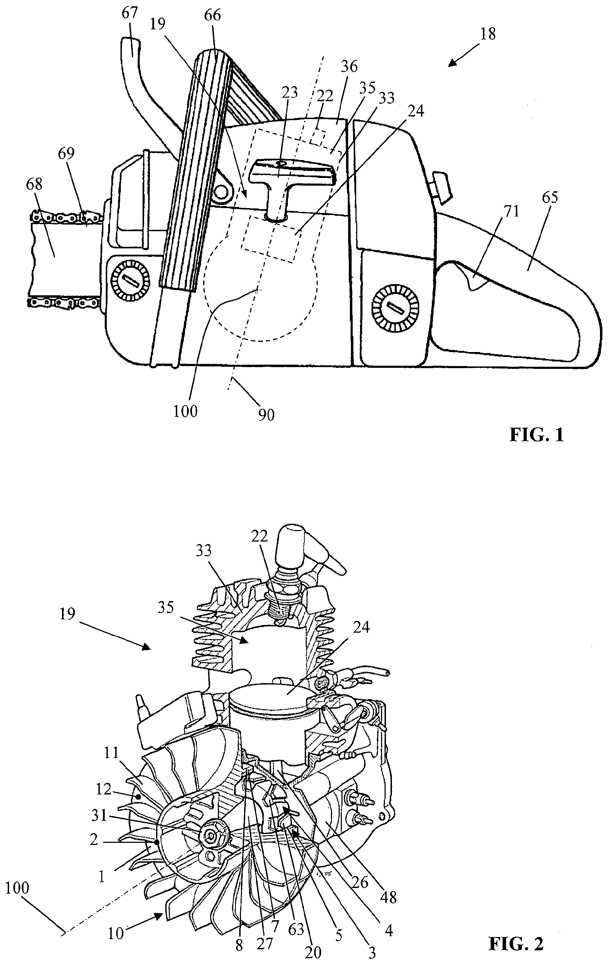

In Fig. 1 ist als Ausführungsbeispiel für ein Arbeitsgerät 18 eine Motorsäge gezeigt. Das Arbeitsgerät 18 ist ein handgeführtes, insbesondere tragbares Arbeitsgerät. Das Arbeitsgerät 18 kann auch ein Trennschleifer, ein Blasgerät, ein Freischneider oder dergleichen tragbares, handgeführtes Arbeitsgerät sein.

Die Motorsäge besitzt ein Motorgehäuse 36, an dem eine Führungsschiene 68 festgelegt ist. An der Führungsschiene 68 ist eine Sägekette 69 umlaufend geführt. Im Motorgehäuse 36 ist ein Verbrennungsmotor 19 angeordnet, der in Fig. 1 mit gestrichelter Linie dargestellt ist. Der Verbrennungsmotor 19 treibt die Sägekette 69 im Betrieb um die Führungsschiene 68 umlaufend an. Im Ausführungsbeispiel ist der Verbrennungsmotor 19 als gemischgeschmierter Zweitaktmotor ausgebildet. Der Verbrennungsmotor 19 kann auch ein Viertaktmotor, insbesondere ein gemischgeschmierter Viertaktmotor sein. Der Verbrennungsmotor 19 ist vorteilhaft ein mit Niederdruckeinspritzung arbeitender Verbrennungsmotor. Dem Verbrennungsmotor 19 wird der Kraftstoff demnach unter geringem Druck, vorteilhaft unter einem Druck von 0 bar bis 2 bar Überdruck gegenüber dem Umgebungsdruck, über ein Kraftstoffventil zugeführt. Zum Führen der Motorsäge im Betrieb ist am Motorgehäuse 36 ein hinterer Handgriff 65 angeordnet, an dem ein Gashebel 71 schwenkbar gelagert ist. Über den Gashebel 71 ist der Verbrennungsmotor 19 zu bedienen.

Zum Führen der Motorsäge ist außerdem ein Griffrohr 66 vorgesehen, das das Motorgehäuse 36 der Motorsäge übergreift. Die Motorsäge besitzt einen Handschutz 67, der sich an der der Führungsschiene 68 zugewandten Seite des Griffrohrs 66 erstreckt. Der Handschutz 67 dient vorteilhaft zum Auslösen einer nicht gezeigten Bremseinrichtung für die Sägekette 69.

Fig. 2 zeigt den Verbrennungsmotor 19 aus Fig. 1 in einer schematischen Darstellung. Der Verbrennungsmotor 19 weist einen Zylinder 33 mit einem darin auf und ab bewegten Kolben 24 auf, der über ein Pleuel 26 eine Kurbelwelle 27 antreibt. Die Kurbelwelle 27 dreht sich im Betrieb um eine Drehachse 100. Im Zylinder 33 ist ein Brennraum 35 ausgebildet, der vom Kolben 24 begrenzt ist. In den Brennraum 35 ragt eine Zündkerze 22. Die Zündkerze 22 dient zur Zündung eines im Brennraum 35 verdichteten Gemischs.

Mit der Kurbelwelle 27 läuft ein Gebläserad 1 um, das drehfest an der Kurbelwelle 27 fixiert ist. Zur Fixierung des Gebläserads 1 dient eine Fixiermutter 31, die auf ein Ende der Kurbelwelle 27 aufgeschraubt ist und das Gebläserad 1 dadurch axial an der Kurbelwelle 27 fixiert. Das Gebläserad 1 dient zur Förderung von Kühlluft für den Verbrennungsmotor 19. Das Gebläserad 1 dient gleichzeitig als Schwungrad. Weiterhin weist das Gebläserad 1 einen Rotor 3 eines Generators 4 auf.

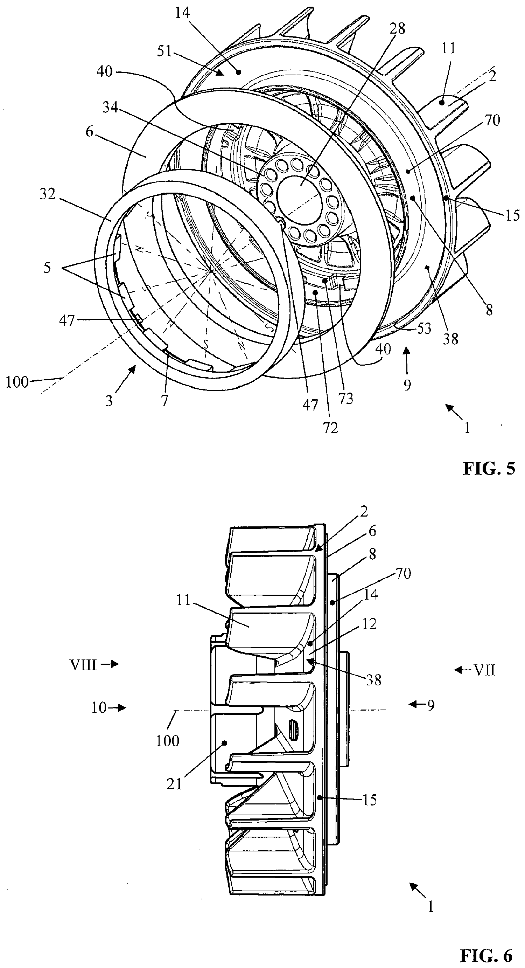

Das Gebläserad 1 umfasst einen Grundkörper 2. Der Grundkörper 2 des Gebläserads 1 besitzt eine erste Seite 9, die in Fig. 6 dargestellt ist. Die erste Seite 9 ist in eingebautem Zustand des Gebläserads 1 dem Verbrennungsmotor 19 zugewandt. Wie in Fig. 2 dargestellt, besitzt der Grundkörper 2 des Gebläserads 1 eine zweite Seite 10. Die zweite Seite 10 des Grundkörpers 2 ist in eingebautem Zustand des Gebläserads 1 dem Verbrennungsmotor 19 abgewandt. Auf der ersten Seite 9 des Grundkörpers 2 ist ein Rückschlussring 7 angeordnet. Der Rückschlussring 7 ist Teil des Rotors 3. Der Rotor 3 ist am Grundkörper 2 des Gebläserads 1 fixiert. Neben dem Rückschlussring 7 umfasst der Rotor 3 des Generators 4 mindestens einen Magneten 5. In den Ausführungsbeispielen ist der Magnet 5 am Rückschlussring 7 angeordnet. In den Ausführungsbeispielen sind mehrere Magnete 5 in regelmäßigen Abständen über den Umfang des Rückschlussrings 7 verteilt. Jeder Magnet 5 liegt unmittelbar am Rückschlussring 7 an. Der Rückschlussring 7 ist metallisch und dient zur Verstärkung des magnetischen Flusses des Magneten 5.

Der Verbrennungsmotor 19 weist ein Kurbelgehäuse 48 auf, in dem die Kurbelwelle 27 drehbar gelagert ist. Am Kurbelgehäuse 48 ist ein Stator 20 des Generators 4 festgelegt. Der Stator 20 umfasst mindestens eine Spule 63. Das Gebläserad 1 übergreift den Stator 20 an seinem Umfang, so dass der Stator 20 radial innerhalb des Rotors 3 liegt. Bei Drehung des Gebläserads 1 um die Drehachse 100 induzieren die Magnete 5 des Rotors 3 eine Spannung in der Spule 63 des Stators 20.

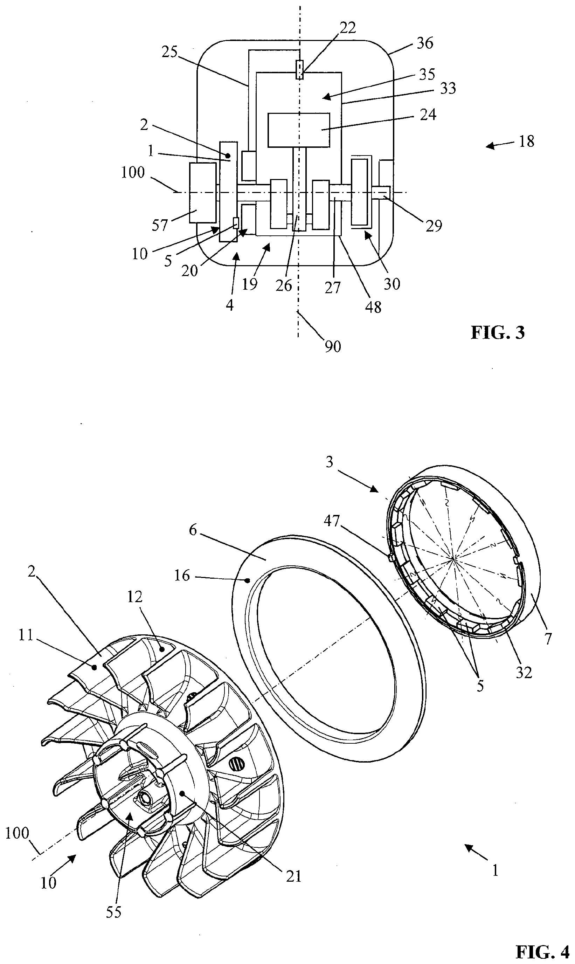

Fig. 3 zeigt in schematischer Darstellung einen Schnitt durch die Motorsäge nach Fig. 1. Die Schnittebene ist von der Drehachse 100 und einer senkrecht zur Drehachse 100 orientierten Zylinderlängsachse 90 aufgespannt. Das Arbeitsgerät 18 besitzt zum Anwerfen des Verbrennungsmotors 19 eine Starteinrichtung 57. Die Starteinrichtung 57 kann beispielsweise ein Seilzugstarter oder auch eine elektrisch angetriebene Starteinrichtung sein. Die vom Verbrennungsmotor 19 erzeugte Rotationsbewegung der Kurbelwelle 27 wird über eine Fliehkraftkupplung 30 auf ein Antriebsritzel 29 übertragen und im Ausführungsbeispiel zum Antrieb der in Fig. 1 gezeigten Sägekette 69 genutzt. Wie in Fig. 3 dargestellt, ist das Gebläserad 1 in Richtung der Drehachse 100 zwischen der Starteinrichtung 57 und dem Verbrennungsmotor 19 angeordnet. Zwischen dem Verbrennungsmotor 19 und dem Grundkörper 2 des Gebläserads 1 ist der Generator 4 angeordnet. Der Stator 20 des Generators 4 ist am Kurbelgehäuse 48 des Verbrennungsmotors 19 festgelegt. Der Rotor 3 (Fig. 2) des Generators 4 ist am Grundkörper 2 des Gebläserads 1 festgelegt.

Fig. 4 zeigt eine Explosionsdarstellung des Gebläserads 1. Das Gebläserad 1 umfasst den Grundkörper 2, einen Befestigungsring 32 und einen Trägheitsring 6. Am Befestigungsring 32 sind der Rückschlussring 7 und die Magnete 5 gehalten. Der Befestigungsring 32 ist aus einem elektrisch isolierenden Material.

Der Trägheitsring 6 ist getrennt vom Rückschlussring 7 ausgebildet. In einer Schnittebene senkrecht zur Drehachse 100 ist der Trägheitsring 6 kreisringförmig. Die Dichte des Materials des Trägheitsrings 6 ist größer als die Dichte des Materials des Grundkörpers 2 des Gebläserads 1. Der Grundkörper 2 besteht vorteilhaft aus Leichtbaumaterial, insbesondere aus Leichtmetall wie Aluminium oder Magnesium, oder aus Kunststoff. In den Ausführungsbeispielen besteht der Grundkörper 2 aus Magnesium. Der Trägheitsring 6 besteht vorteilhaft aus Stahl. Andere Materialien für den Trägheitsring 6 können beispielsweise Zinkdruckguss, Kupfer, Keramik, Titan oder dgl. sein. Der Trägheitsring 6 kann aus metallischen oder nichtmetallischen Materialien bestehen. Die Dichte des Materials des Trägheitsrings 6 beträgt vorteilhaft mindestens das 2fache, insbesondere mindestens das 3fache, vorzugsweise mindestens das 4fache der Dichte des Materials des Grundkörpers 2.

Die Magnete 5 des Rückschlussrings 7 sind vorzugsweise am inneren Umfangsrand des Rückschlussrings 7 in regelmäßigen Abständen zueinander angeordnet. Insgesamt sind zwölf Magnete 5 vorgesehen. Die Magnete 5 und der Rückschlussring 7 bilden gemeinsam den Rotor 3 des in den Figuren 2 und 3 gezeigten Generators 4. Im Ausführungsbeispiel umfasst der Rotor 3 außerdem den Befestigungsring 32.

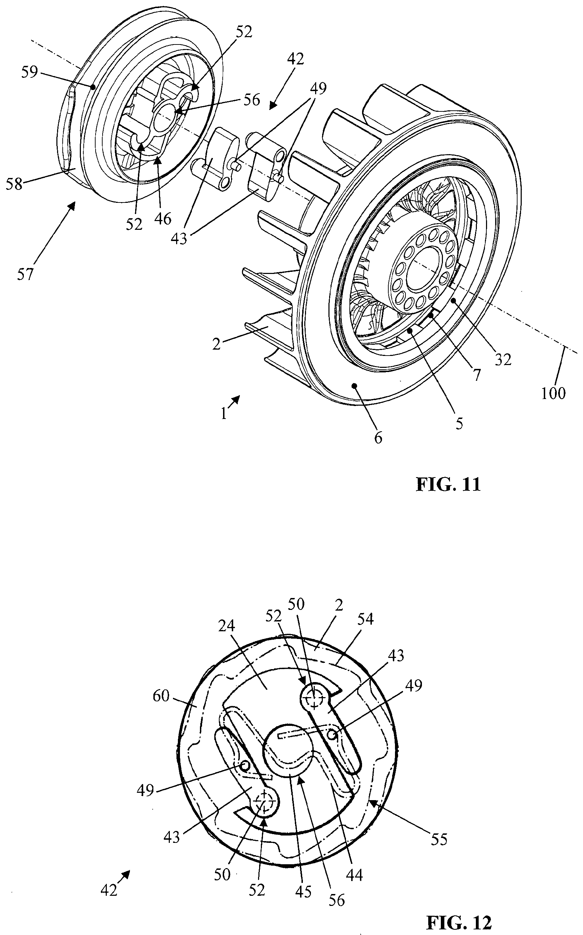

Die zweite Seite 10 des Grundkörpers 2 ist dem Trägheitsring 6 und dem Rückschlussring 7 abgewandt. Im Bereich der Drehachse 100 ist vorzugsweise auf der zweiten Seite 10 des Grundkörpers 2 eine Aufnahme 55 ausgebildet. Die Aufnahme 55 ist im Wesentlichen hohlzylindrisch. Die Aufnahme 55 dient im Ausführungsbeispiel zur Aufnahme eines in Fig. 11 dargestellten Mitnehmers 46 der in Fig. 3 dargestellten Anwerfvorrichtung 57. Die Funktion des Mitnehmers 46 ist weiter unten erläutert. Die in Fig. 4 dargestellte Aufnahme 55 besitzt eine im Wesentlichen der Mantelfläche eines Zylinders entsprechend geformte Außenwand 21.

Auf der zweiten Seite 10 des Grundkörpers 10 sind Strömungsleitelemente 11 angeordnet. Insgesamt sind fünfzehn Strömungsleitelemente 11 in bezüglich der Drehachse 100 gleichmäßigen Winkelabständen zueinander auf der zweiten Seite 10 des Grundkörpers 2 angeordnet. Die Strömungsleitelemente 11 erstrecken sich radial außerhalb der Außenwand 21. Die Strömungsleitelemente 11 sind schaufelförmig ausgebildet. Sie erstrecken sich im Wesentlichen radial zur Drehachse 100. Die Strömungsleitelemente 11 sind auf eine Strömungsleitfläche 12 des Gebläserads 1 aufgesetzt. Die Strömungsleitelemente 11 erzeugen im Betrieb bei einer Rotation des Gebläserads 1 einen Kühlluftstrom für den Verbrennungsmotor 19.

Fig. 5 zeigt das Gebläserad 1 aus Fig. 4 in einer Explosionsdarstellung von der dem Kurbelgehäuse 48 (Fig. 2) zugewandten Seite. Der Grundkörper 2 ist demnach in einer perspektivischen Ansicht auf seine erste Seite 9 dargestellt. Der Grundkörper 2 weist eine Außenwand 15 auf. Die Außenwand 15 verläuft ringförmig um die Drehachse 100 entlang des äußeren Umfangs des Grundkörpers 2 und ist in radialer Richtung zur Drehachse 100 Teil der äußersten Begrenzung des Grundkörpers 2. Die Außenwand 15 weist eine radial innenliegende Flanke 53 auf. Die radial innenliegende Flanke 53 der Außenwand 15 begrenzt eine Aufnahme 51 für den Trägheitsring 6. Die Aufnahme 51 ist als ringförmige Vertiefung in der ersten Seite 9 des Grundkörpers 2 ausgebildet.

Der Grundkörper 2 besitzt eine Trennwand 14 zwischen seiner ersten Seite 9 und seiner zweiten Seite 10. Die Trennwand 14 besitzt auf der ersten Seite 9 des Grundkörpers 2 eine erste Seite 38. Die erste Seite 38 der Trennwand 14 ist im zusammengebauten Zustand des Gebläserads 1 dem Trägheitsring 6 zugewandt. Die erste Seite 38 der Trennwand 14 bildet den Boden der Aufnahme 51 für den Trägheitsring 6 im Grundkörper 2.

Der Grundkörper 2 des Gebläserads 1 umfasst eine Ringwand 8. Die Ringwand 8 verläuft ringförmig um die Drehachse 100. Die Ringwand 8 liegt radial innerhalb der Außenwand 15. Die Ringwand 8 liegt im zusammengebauten Zustand des Gebläserads 1 zwischen dem Trägheitsring 6 und dem Rückschlussring 7. Die Ringwand 8 liegt im zusammengebauten Zustand des Gebläserads 1 zwischen dem Trägheitsring 6 und dem Befestigungsring 32.

Die Ringwand 8 weist eine radial außenliegende Seite 70 auf. Die außenliegende Seite 70 der Ringwand 8 erstreckt sich kreisförmig umlaufend um die Drehachse 100 in axialer Richtung der Drehachse 100. Die außenliegende Seite 70 der Ringwand 8 begrenzt die Aufnahme 51 für den Trägheitsring 6. Die außenliegende Seite 70 der Ringwand 8 verläuft im Ausführungsbeispiel parallel zu einer innenliegenden Flanke 53 der Außenwand 15. Zwischen der außenliegenden Seite 70 der Ringwand 8 und der innenliegenden Flanke 53 der Außenwand 15 erstreckt sich die erste Seite 38 der Trennwand 14. Die Aufnahme 51 für den Trägheitsring 6 wird von der innenliegenden Flanke 53 der Außenwand 15, der ersten Seite 38 der Trennwand 14 und der außenliegenden Seite 70 der Ringwand 8 begrenzt.

Die Ringwand 8 weist eine radial innenliegende Seite 72 auf. Die radial innenliegende Seite 72 der Ringwand 8 verläuft vorzugsweise parallel zur radial außenliegenden Seite 70 der Ringwand 8. Die radial innenliegende Seite 72 liegt radial innerhalb der außenliegenden Seite 70. Im zusammengebauten Zustand des Gebläserads 1 liegt der Befestigungsring 32 an der radial innenliegenden Seite 72 der Ringwand 8 an.

Radial innenliegend bezüglich der radial innenliegenden Seite 72 der Ringwand 8 schließt an die radial innenliegende Seite 72 vorteilhaft ein Vorsprung 73 des Grundkörpers 2 an. Der Vorsprung 73 verläuft kreisringförmig um die Drehachse 100 in einer Ebene, die im Wesentlichen senkrecht zur Drehachse 100 und zur Ringwand 8 orientiert ist. Im zusammengebauten Zustand des Gebläserads 1 liegt der Rückschlussring 7 am Vorsprung 73 an. Im zusammengebauten Zustand des Gebläserads 1 liegt der Befestigungsring 32 am Vorsprung 73 an.

Der Vorsprung 73 weist im Ausführungsbeispiel mehrere erste Positioniermittel 40 zur Positionierung des Rückschlussrings 7 im Grundkörper 2 auf. Das erste Positioniermittel 40 ist im Ausführungsbeispiel als eine Vertiefung im Vorsprung 73 ausgebildet. Die Vertiefung, die das erste Positioniermittel 40 bildet, erstreckt sich im Wesentlichen in Richtung der Drehachse 100. Korrespondierend zu den ersten Positioniermitteln 40 sind am Rückschlussring 7 mehrere zweite Positioniermittel 47 ausgebildet. Im Ausführungsbeispiel nach der Fig. 5 sind die zweiten Positioniermittel 47 als Nasen ausgebildet, die in axialer Richtung über den Befestigungsring 32 hervorstehen. Im zusammengebauten Zustand des Gebläserads 1 greifen die Nasen der zweiten Positioniermittel 47 in die ersten Positioniermittel 40. Auf diese Weise ist der Befestigungsring 32 formschlüssig im Grundkörper 2 positioniert. Der Rückschlussring 7 und die Magnete 5 sind drehfest am Befestigungsring 32 fixiert. Durch die Positionierung des Befestigungsrings 32 relativ zum Grundkörper 2 erfolgt gleichzeitig eine Positionierung des Rückschlussrings 7 und der Magnete 5 relativ zum Grundkörper 2. Im Ausführungsbeispiel sind drei Positioniermittel 40 und drei Positioniermittel 47 gleichmäßig über den Innenumfang der Ringwand 8 verteilt angeordnet.

Im Bereich der Drehachse 100 weist der Grundkörper 2 des Gebläserads 1 eine Nabe 34 auf. Die Nabe 34 besitzt im Ausführungsbeispiel eine kegelförmige Befestigungsöffnung 28, die den Grundkörper 2 in Richtung der Drehachse 100 vollständig durchdringt. Auch eine andere, insbesondere eine unrunde Gestaltung der Befestigungsöffnung 28 kann jedoch vorteilhaft sein. Auch eine formschlüssige Verbindung, insbesondere mittels einer Passfeder, kann vorteilhaft sein.

Fig. 6 zeigt eine Seitenansicht des Gebläserads 1 in Richtung senkrecht zur Drehachse 100. Die Außenwand 21 der Aufnahme 55 für den Mitnehmer 46 ragt in Richtung der Drehachse 100 auf der zweiten Seite 10 des Grundkörpers 2 über die Strömungsleitelemente 11 hinaus. Die Ringwand 8 ragt vorzugsweise in Richtung der Drehachse 100 auf der ersten Seite 9 des Grundkörpers 2 über den Trägheitsring 6 und die Außenwand 15 hervor. Im zusammengebauten Zustand des Gebläserads 1 ragt der Trägheitsring 6 in Richtung der Drehachse 100 auf der ersten Seite 9 des Grundkörpers 2 über die Außenwand 15 des Grundkörpers 2 hervor.

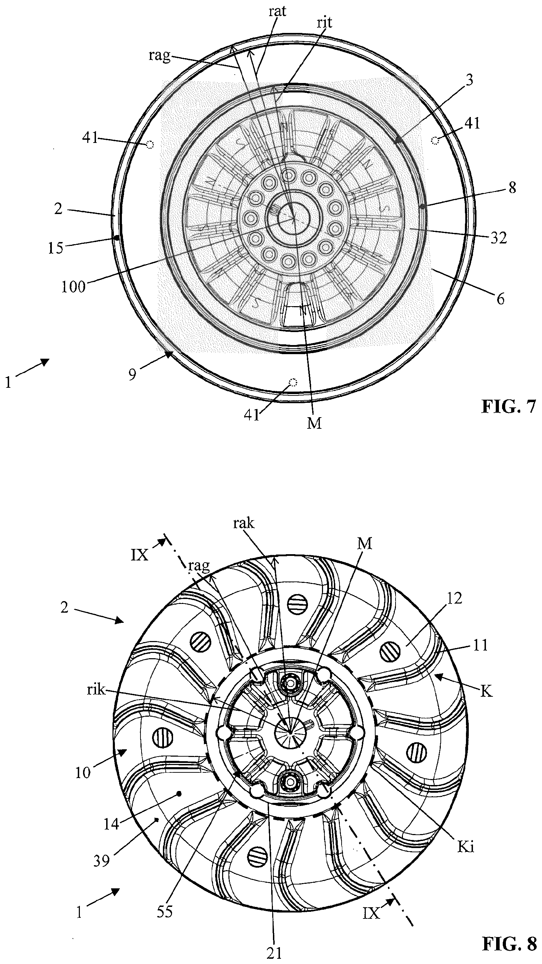

Fig. 7 zeigt eine Ansicht des Gebläserads 1 in Richtung der Drehachse 100 auf die erste Seite 9 des Grundkörpers 2. Der Grundkörper 2 besitzt einen Mittelpunkt M. Der Mittelpunkt M liegt auf der Drehachse 100. In einer Ansicht in Richtung der Drehachse 100 ist der Grundkörper 2 kreisförmig. Der Grundkörper 2 wird in radialer Richtung zur Drehachse 100 durch die Außenwand 15 begrenzt. Der Grundkörper 2 besitzt einen Außenradius rag. Die Außenwand 15 verläuft ringförmig um die Drehachse 100 entlang des Außenradius rag des Grundkörpers 2. Der Trägheitsring 6 liegt radial innerhalb der Außenwand 15. Der Trägheitsring 6 ist radial außerhalb der Ringwand 8 angeordnet. Der Trägheitsring 6 besitzt einen äußeren Radius rat. Der äußere Radius rat des Trägheitsrings 6 beträgt vorteilhaft das 0,8fache bis das 1,0fache des Außenradius rag des Grundkörpers 2. Im Ausführungsbeispiel nach der Fig. 7 beträgt der äußere Radius rat des Trägheitsrings 6 mehr als das 0,9fache des Außenradius rag des Grundkörpers 2.

Der Trägheitsring 6 besitzt einen inneren Radius rit. Der innere Radius rit des Trägheitsrings 6 beträgt vorteilhaft mindestens das 0,6fache des Außenradius rag des Grundkörpers 2. Der innere Radius rit des Trägheitsrings 6 beträgt im Ausführungsbeispiel nach der Fig. 7 mehr als das 0,7fache des Außenradius rag des Grundkörpers 2. Der innere Radius rit beträgt vorteilhaft weniger als das 0,9fache, insbesondere weniger als das 0,8fache des Außenradius rag des Grundkörpers 2.

Der Trägheitsring 6 ist benachbart zu der in Fig. 5 gezeigten ersten Seite 38 der Trennwand 14 des Grundkörpers 2 angeordnet. In Fig. 7 sind mit gestrichelter Linie schematisch Noppen 41 der ersten Seite 38 der Trennwand 14 eingezeichnet. Die Noppen 41 sind vorteilhaft auf der ersten Seite 38 der Trennwand 14 festgelegt. Die Noppen 41 ragen auf der ersten Seite 9 des Grundkörpers 2 in Richtung der Drehachse 100 über die erste Seite 38 der Trennwand 14 hervor. In den Ausführungsbeispielen ragen die Noppen in Richtung der Drehachse 100 auf der ersten Seite 9 des Grundkörpers 2 etwa 0,2 mm über die erste Seite 38 der Trennwand 14 hervor. In der Ansicht des Grundkörpers 2 in Richtung der Drehachse 100 nach Fig. 7 besitzen die Noppen 41 einen kreisförmigen Umriss. Ein senkrecht zur Drehachse 100 gemessener Durchmesser des kreisförmigen Umrisses der Noppen 41 beträgt in den Ausführungsbeispielen etwa 1 mm bis 3 mm. In den Ausführungsbeispielen liegt der Trägheitsring 6 ausschließlich auf den Noppen 41 direkt am Grundkörper 2 auf. In axialer Richtung bilden die Noppen 41 einen Anschlag für den Trägheitsring 6. In den Ausführungsbeispielen sind genau drei Noppen 41 vorgesehen. Dadurch ergibt sich eine Dreipunktlagerung für den Trägheitsring 6. Die drei Noppen 41 sind auf einem gemeinsamen Kreis in Winkelabständen von etwa 120° bezüglich der Drehachse 100 zueinander angeordnet. Es kann aber auch vorgesehen sein, dass der Trägheitsring direkt an der ersten Seite 38 der Trennwand 14 anliegt.

Wie in Fig. 7 dargestellt, ist der Trägheitsring 6 radial außerhalb des Befestigungsrings 32, und damit radial außerhalb des Rückschlussrings 7, angeordnet.

Fig. 8 zeigt eine Ansicht des Gebläserads 1 aus Fig. 4 in Richtung der Drehachse 100 auf die zweite Seite 10 des Grundkörpers 2. Die Strömungsleitelemente 11 des Grundkörpers 2 sind in einem Kreisringbereich K des Grundkörpers 2 angeordnet. Der Kreisringbereich K besitzt den Mittelpunkt M, der auf der Drehachse 100 liegt. Auf seiner radial innenliegenden Seite wird der Kreisringbereich K durch einen innenliegenden Rand Ki begrenzt. Der innenliegende Rand Ki ist in Fig. 8 mit gestrichelter Linie eingezeichnet. Der innenliegende Rand Ki besitzt einen inneren Radius rik. Der innere Radius rik des Kreisringbereichs K entspricht vorteilhaft höchstens dem 0,5fachen des Außenradius rag des Grundkörpers 2. Im Ausführungsbeispiel nach der Fig. 8 beträgt der innere Radius rik des Kreisringbereichs K etwa das 0,4fache bis 0,5fache des Außenradius rag des Grundkörpers 2. Der Kreisringbereich K weist einen äußeren Radius rak auf. Der äußere Radius rak des Kreisringbereichs K entspricht vorzugsweise mindestens dem 0,9fachen des Außenradius rag des Grundkörpers 2. Im Ausführungsbeispiel nach der Fig. 8 entspricht der äußere Radius rak des Kreisringbereichs K dem 1,0fachen des Außenradius rag des Grundkörpers 2. Der Kreisringbereich K liegt radial außerhalb der Außenwand 21 der Aufnahme 55 für den in Fig. 11 gezeigten Mitnehmer 46.

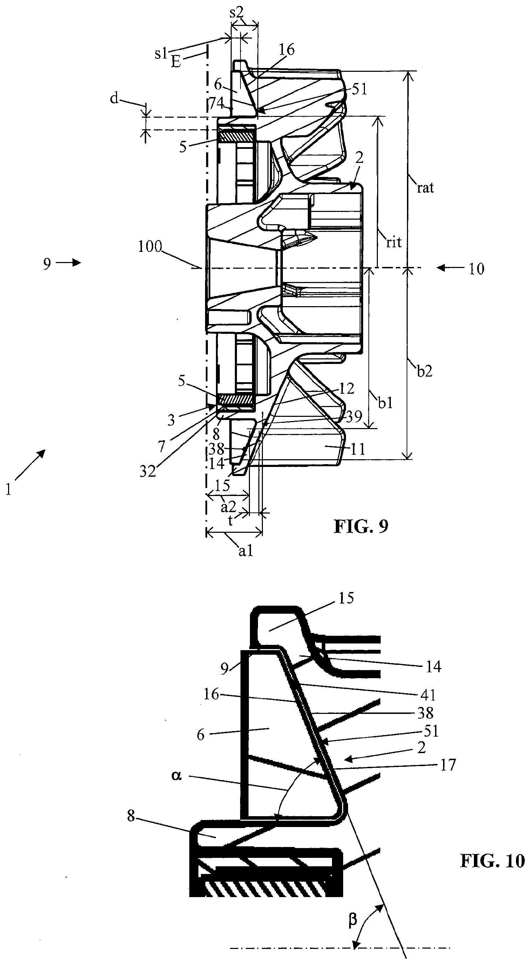

Fig. 9 zeigt einen Schnitt entlang der Linie IX-IX in Fig. 8. Die Schnittebene enthält die Drehachse 100. Der Trägheitsring 6 und der Rückschlussring 7 sind im Ausführungsbeispiel durch die Ringwand 8 voneinander getrennt. Der Trägheitsring 6 und der Befestigungsring 32 sind durch die Ringwand 8 voneinander getrennt. Am Rückschlussring 7 liegen die Magnete 5 an. Die Magnete 5 kontaktieren den Rückschlussring 7 direkt.

Der Trägheitsring 6 ist in einem Abstand d zu dem Magneten 5 am Grundkörper 2 des Gebläserads 1 fixiert. Der Abstand d ist senkrecht zur Drehachse 100 gemessen. Der Abstand d beträgt vorteilhaft mindestens 0,5 mm, insbesondere mindestens 1 mm. Der Magnet 5 ist radial innerhalb der Ringwand 8 angeordnet. Der Magnet 5 ist radial innerhalb des Rückschlussrings 7 angeordnet.

Der Grundkörper 2 des Gebläserads 1 besitzt eine gedachte Abschlussebene E. Die gedachte Abschlussebene E ist in Fig. 9 mit gestrichelter Linie eingezeichnet. Die gedachte Abschlussebene E steht senkrecht zur Drehachse 100. Die gedachte Abschlussebene E ist auf der ersten Seite 9 des Grundkörpers 2 angeordnet. Die gedachte Abschlussebene E verläuft durch die in Richtung der Drehachse 100 äußerste Begrenzung des Grundkörpers 2. Die Strömungsleitfläche 12 auf der zweiten Seite 10 des Grundkörpers 2 besitzt einen Abstand a1 von der gedachten Abschlussebene E. Der Abstand a1 ist in Richtung der Drehachse 100 an einer Stelle der Strömungsleitfläche 12 gemessen, die einen Abstand b1 zur Drehachse 100 aufweist. In einem Abstand b2 zur Drehachse 100 besitzt die Strömungsleitfläche 12 einen Abstand a2 zur gedachten Abschlussebene E.

Im Ausführungsbeispiel ist der Abstand b2 der Strömungsleitfläche 12 zur Drehachse 100 größer als der Abstand b1. Der Abstand a1 ist größer als der Abstand a2. Der Abstand a1, a2 der Strömungsleitfläche 12 von der Abschlussebene E nimmt mit sich verringerndem Abstand b1, b2 zu. Je weiter radial außen ein Punkt auf der Strömungsleitfläche 12 liegt, umso näher liegt er an der Abschlussebene E, also umso näher an einem Kurbelgehäuse 48 des Verbrennungsmotors 19, an dem das Gebläserad 1 fixiert ist. Die Strömungsleitfläche ist radial nach außen in Richtung auf das Kurbelgehäuse 48 geneigt.

Wie aus der Fig. 9, und insbesondere aus der Zusammenschau der Figuren 4, 8 und 9 ersichtlich ist, entspricht die Form der Strömungsleitfläche 12 im Ausführungsbeispiel der Form einer Mantelfläche eines Kreiskegelstumpfs.

Die Trennwand 14 weist eine zweite Seite 39 auf. Die zweite Seite 39 der Trennwand 14 ist dem Trägheitsring 6 und dem Rückschlussring 7 abgewandt. Die Strömungsleitfläche 12 ist zumindest teilweise von der zweiten Seite 39 der Trennwand 14 des Grundkörpers 2 gebildet. Die Strömungsleitfläche 12 ist zumindest teilweise von der Trennwand 14 des Grundkörpers 2 gebildet. Die Trennwand 14 erstreckt sich um die Drehachse 100 umlaufend zwischen der Ringwand 8 und der Außenwand 15 des Grundkörpers 2. Auf der zweiten Seite 10 des Grundkörpers 2, auf der die Trennwand 14 Teil der Strömungsleitfläche 12 ist, sind auf der Trennwand 14 die Strömungsleitelemente 11 angeordnet. Die Trennwand 14 besitzt eine in Richtung der Drehachse 100 gemessene Stärke t. Die Stärke t der Trennwand 14 ist im Ausführungsbeispiel konstant. Die erste Seite 38 der Trennwand 14 verläuft zumindest teilweise parallel zur zweiten Seite 39 der Trennwand 14. Die Strömungsleitfläche 12 verläuft an der zweiten Seite 39 der Trennwand 14. Eine Kontur der Trennwand 14 auf der ersten Seite 9 des Grundkörpers 2 folgt einer Kontur der Strömungsleitfläche 12 auf der zweiten Seite 10 des Grundkörpers 2.

Die erste Seite 38 der Trennwand 14 bildet den Boden für die Aufnahme 51 im Grundkörper 2. Die Aufnahme 51 dient zur Aufnahme des Trägheitsrings 6. Der Trägheitsring 6 ist auf dem Boden der Aufnahme 51 oder auf Noppen 41 (Fig. 7) am Boden der Aufnahme 51 anliegend im Grundkörper 2 angeordnet. Der Trägheitsring 6 besitzt eine zweite Seitenfläche 16. Die zweite Seitenfläche 16 des Trägheitsrings 6 ist dem Grundkörper 2 zugewandt. Die zweite Seitenfläche 16 des Trägheitsrings 6 ist der ersten Seite 38 der Trennwand 14 zugewandt. Im zusammengebauten Zustand des Gebläserads 1 folgt eine Kontur der zweiten Seitenfläche 16 des Trägheitsrings 6 der Kontur der ersten Seite 38 der Trennwand 14 zumindest teilweise.

Der Trägheitsring 6 besitzt eine erste Seitenfläche 74. Die erste Seitenfläche 74 ist dem Grundkörper 2 abgewandt. Die erste Seitenfläche 74 ist im Ausführungsbeispiel eben ausgebildet und liegt in etwa in einer Ebene, die im Wesentlichen senkrecht zur Drehachse 100 verläuft.

Der Trägheitsring 6 besitzt eine in Richtung der Drehachse 100 gemessene Stärke s1. Die Stärke s1 ist am äußeren Radius rat des Trägheitsrings 6 gemessen. Der Trägheitsring 6 besitzt eine in Richtung der Drehachse 100 gemessene Stärke s2. Die Stärke s2 ist am inneren Radius rit des Trägheitsrings 6 gemessen. Die Stärke s1 des Trägheitsrings 6 ist bezüglich der Drehachse 100 vorzugsweise radial weiter außenliegend, also in größerem Abstand zur Drehachse 100 gemessen als die Stärke s2. Die Stärke s1 ist kleiner als die Stärke s2. Der Trägheitsring 6 besitzt mindestens einen Abschnitt, in dem die in Richtung der Drehachse gemessene Stärke s1, s2 des Trägheitsrings 6 radial nach außen hin abnimmt. Die Stärke des Trägheitsrings 6 nimmt vom inneren Radius rit zum äußeren Radius rat hin vorteilhaft kontinuierlich ab. Die Stärke s1 des Trägheitsrings 6 beträgt am äußeren Radius rat des Trägheitsrings 6 vorteilhaft etwa 60% bis etwa 80%, insbesondere etwa 70% der Stärke s2 am inneren Radius rit des Trägheitsrings 6.

Die Seitenfläche 16 des Trägheitsrings 6 verläuft konisch. Wie sich aus den Figuren 7 und 9 ergibt, liegt die Seitenfläche 16 auf den Noppen 41 der ersten Seite 38 der Trennwand 14 auf. Durch das Zusammenspiel der Dreipunktlagerung auf den Noppen 41 und der Auflage der konischen Seitenfläche des Trägheitsrings 6 auf den Noppen 41 ist der Trägheitsring 6 auf dem Grundkörper 2 zentriert. Auch ein anderer Verlauf der Seitenfläche 16, beispielsweise ein konvexer oder konkaver Verlauf kann jedoch vorteilhaft sein.

Fig. 10 zeigt eine vergrößerte Detaildarstellung der Aufnahme 51 für den Trägheitsring 6 aus Fig. 9. Zwischen der ersten Seite 38 der Trennwand 14 und der zweiten Seitenfläche 16 des Trägheitsrings 6 ist ein Spalt ausgebildet. Der Spalt ist in Fig. 10 mit einer weißen Linie dargestellt. Der Spalt ist mit Klebstoff 17 gefüllt. Der Trägheitsring 6 ist am Grundkörper 2 mit dem Klebstoff 17 befestigt. Der Spalt zwischen der zweiten Seitenfläche 16 und der ersten Seite 38 der Trennwand 14 wird im Ausführungsbeispiel von einer Noppe 41 überbrückt. An der Stelle, an der sich die Noppe 41 befindet, ist die weiße Linie, die den Spalt zwischen der zweiten Seitenfläche 16 und der ersten Seite 38 der Trennwand 14 darstellt, schwarz gefärbt. Der Spalt erstreckt sich auch zwischen dem Trägheitsring 6 und der Ringwand 8 und ist auch dort mit Klebstoff 17 gefüllt. Der Spalt erstreckt sich auch zwischen dem Trägheitsring 6 und der Außenwand 15 des Grundkörpers 2 und ist vorzugsweise auch dort mit Klebstoff 17 gefüllt. Sowohl zur Ringwand 8 als auch zur Außenwand 15 besitzt der Trägheitsring 6 vorteilhaft in radialer Richtung Spiel. Der zwischen dem Trägheitsring 6 und dem Grundkörper 2 an der ersten Seite 38 der Trennwand 14, der Ringwand 8 und der Außenwand 15 gebildete Spalt ist vorteilhaft mindestens teilweise, besonders bevorzugt etwa bündig bis zur ersten Seitenfläche 74, mit Klebstoff gefüllt. Der Trägheitsring 6 kontaktiert den Grundkörper 2 lediglich über die drei Noppen 41 unmittelbar. Durch den Spalt ist ein Raum für den Klebstoff 17 gebildet. Der Trägheitsring 6 liegt auf dem Klebstoff 17 und/oder den Noppen 41 auf.

Die erste Seite 38 der Trennwand 14 ist im Ausführungsbeispiel zur Ringwand 8 um einen Winkel α geneigt, der kleiner als 90° ist. Der Winkel α ist dabei zur außenliegenden Seite 70 der Ringwand 8 in einer Schnittebene gemessen, die die Drehachse 100 enthält. Der Winkel α beträgt vorteilhaft 50° bis 85°, insbesondere 60° bis 80°. Die außenliegende Seite 70 der Ringwand 8 verläuft vorteilhaft parallel zur Drehachse 100.

Die erste Seite 38 der Trennwand 14 ist zur Drehachse 100 um einen Winkel β geneigt, der kleiner als 90° ist. Der Winkel β ist dabei in einer Schnittebene gemessen, die die Drehachse 100 enthält. Der Winkel β beträgt vorteilhaft 50° bis 85°, insbesondere 60° bis 80°. Vorteilhaft sind die Winkel α und β gleich groß.

Die Kontur des Trägheitsrings 6 folgt der Kontur der ersten Seite 38 der Trennwand 14 an der der Trennwand 14 zugewandten Seite. Dadurch ergibt sich ein näherungsweise dreieckiger, nach außen schmaler werdender Querschnitt des Trägheitsrings 6.

Fig. 11 zeigt eine Explosionsdarstellung von Teilen der Starteinrichtung 57 und dem Gebläserad 1 nach Fig. 4. Die Starteinrichtung 57 ist über eine in Fig. 12 detaillierter dargestellte Koppeleinrichtung 42 mit dem Gebläserad 1 koppelbar. Die Starteinrichtung 57 umfasst eine Seilrolle 58. Wie in Fig. 11 gezeigt, besitzt die Seilrolle 58 eine Nut 59, in der ein nicht gezeigtes Anwerfseil aufgewickelt ist. Das Anwerfseil ist mit einem Ende mit der Seilrolle 58 und dem anderen Ende mit einem in Fig. 1 dargestellten Anwerfgriff 23 verbunden, so dass die Seilrolle 58 durch Ziehen am Anwerfgriff 23 von Hand in

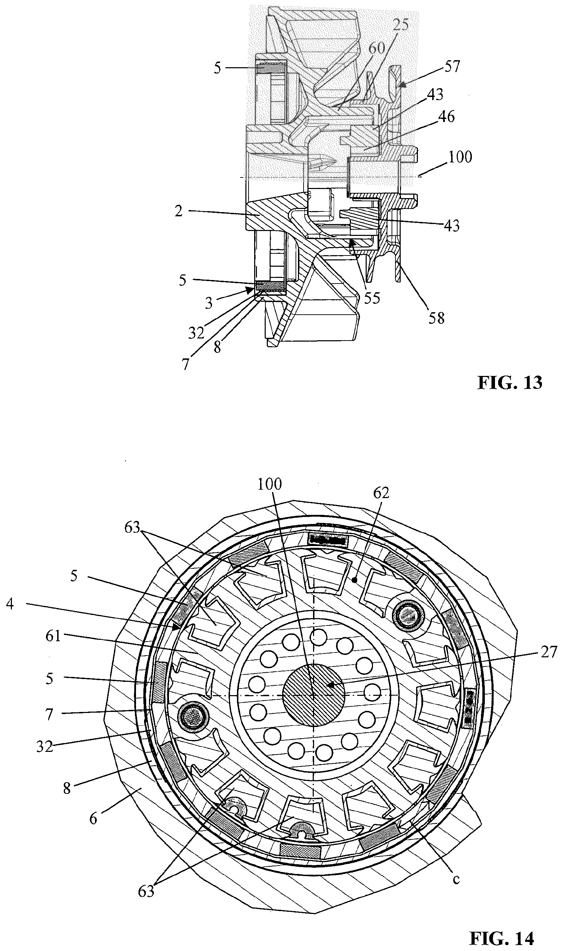

Drehung versetzt werden kann. Die Starteinrichtung 57 besitzt den Mitnehmer 46. Der Mitnehmer 46 ist dem Gebläserad 1 zugewandt. Der Mitnehmer 46 besitzt zwei sich gegenüberliegende Aufnahmen 52, in denen jeweils eine Klinke 43 schwenkbar gelagert ist. Die Klinken 43 dienen zur Kopplung mit dem Gebläserad 1. Jede Klinke 43 besitzt einen Betätigungszapfen 49. An den Betätigungszapfen 49 kann ein Ausschwenken der Klinken 43 bewirkt werden. Zur Aufnahme des Mitnehmers 46 und der Klinken 43 weist der Grundkörper 2 des Gebläserads 1 die in den Figuren 4 und 13 dargestellte Aufnahme 55 auf.

Fig. 12 zeigt schematisch die Betätigung der Koppeleinrichtung 42. Die Klinken 43 sind über eine Federklammer 44 auf einer Lagerwelle 45 der Starteinrichtung 57 gehalten. Die Lagerwelle 45 ist am in Fig. 1 gezeigten Motorgehäuse 36 festgelegt. Wie in Fig. 12 dargestellt, weist die Starteinrichtung 57 zur Aufnahme der Lagerwelle 45 eine zentrale Aufnahme 56 auf. Im zusammengebauten Zustand erstreckt sich die zentrale Aufnahme 56 im Bereich der Drehachse 100 und durchdringt die Starteinrichtung 57 vollständig. Die Seilrolle 58 und der Mitnehmer 46 sind gegenüber der Lagerwelle 45 drehbar. Die Federklammer 44 besitzt eine Nockenkontur. Bei einer Relativbewegung des Mitnehmers 46 gegenüber der Lagerwelle 45 bewegen sich die Betätigungszapfen 49 in der Federklammer 44, da die Federklammer 44 an der Lagerwelle 45 reibschlüssig geklemmt gehalten ist. Aufgrund der Kontur der Federklammer 44 werden die Klinken 43 nach außen geschwenkt. Die Klinken 43 schwenken dabei um Schwenkachsen 50. Die Schwenkachsen 50 liegen im Bereich der Aufnahmen 52 des Mitnehmers 46 und verlaufen parallel zur Drehachse 100.

Die Aufnahme 55 des Grundkörpers 2 des Gebläserads 1 ist im Wesentlichen hohlzylindrisch. Im zusammengebauten Zustand fällt die Zylinderlängsachse mit der Drehachse 100 zusammen. Die Aufnahme 55 weist eine Seitenwand 60 auf. Die der Mantelfläche des Hohlzylinders der Aufnahme 55 gegenüberliegende Innenfläche der Seitenwand 60 der Aufnahme 55 besitzt vorzugsweise eine Nockenkontur 54. In ausgeschwenktem Zustand greifen die Klinken 43 in die Nockenkontur 54 ein. Dadurch wird eine drehfeste Kopplung des Mitnehmers 46 mit dem Grundkörper 2 und dem Gebläserad 1 und damit mit der in Fig. 3 dargestellten Kurbelwelle 27 des Verbrennungsmotors 19 erreicht.

Fig. 13 zeigt einen Schnitt durch den Grundkörper 2 und die Starteinrichtung 57 in zusammengebautem Zustand. Der Mitnehmer 46 mit seinen Klinken 43 ist fast vollständig in der Aufnahme 55 des Grundkörpers 2 des Gebläserads 1 angeordnet. Die Starteinrichtung 57 weist eine Zylinderwand 25 auf. Im zusammengebauten Zustand befindet sich die Zylinderwand 25 radial außerhalb der Seitenwand 60 der Aufnahme 55. Die Zylinderwand 25 übergreift die Seitenwand 60. Radial innerhalb der Zylinderwand 25 und der Seitenwand 60 ist der Mitnehmer 46 mit seinen Klinken 43 angeordnet. Dadurch sind die Klinken 43 vor Verschmutzung geschützt.

Fig. 14 zeigt einen Schnitt senkrecht zur Drehachse 100 durch den Generator 4, den Rückschlussring 7, den Grundkörper 2 und die Kurbelwelle 27. Der Generator 4 umfasst den Stator 20 und den Rotor 3. Der Generator 4 ist im Ausführungsbeispiel als Klauenpolgenerator ausgebildet. Zwischen den Klauen des Stators 20 des Generators 4 sind Pilzköpfe 62 des Stators 20 angeordnet. Die Längsrichtungen der Pilzköpfe 62 erstrecken sich radial zur Drehachse 100. Die Köpfe der Pilzköpfe 62 befinden sich radial zur Drehachse 100 außenliegend. Die Pilzköpfe 62 weisen stielartige Abschnitte auf, die von den Spulen 63 umwickelt sind. In den Spulen 63 wird im Betrieb von den Magneten 5 eine Spannung induziert. Die Magnete 5 sind in regelmäßigen Abständen c zueinander auf dem Rückschlussring 7 angeordnet. Der Rückschlussring 7 ist zumindest teilweise von einem Befestigungsring 32 umschlossen. Der Befestigungsring 32 liegt an der Ringwand 8 an. Der Befestigungsring 32 ist radial innerhalb der Ringwand 8 angeordnet. Der Befestigungsring 32 trennt den Rückschlussring 7 von der Ringwand 8.

## Patentansprüche

1. Gebläserad, umfassend einen Grundkörper (2) mit einer Drehachse (100), wobei das Gebläserad (1) einen Rotor (3) eines Generators (4) aufweist, wobei der Rotor (3) am Grundkörper (2) des Gebläserads (1) fixiert ist, wobei der Rotor (3) einen metallischen Rückschlussring (7) und mindestens einen Magneten (5) umfasst¹, wobei der mindestens eine Magnet (5) am Rückschlussring (7) angeordnet ist², wobei am Grundkörper (2) des Gebläserads (1) ein Trägheitsring (6) in einem Abstand (d) zu dem mindestens einen Magneten (5) fixiert ist, wobei die Dichte des Materials des Trägheitsrings (6) größer ist als die Dichte des Materials des Grundkörpers (2) des Gebläserads (1), wobei das Gebläserad (1) zusätzlich zum Trägheitsring (6) den metallischen Rückschlussring (7) zur Verstärkung des magnetischen Flusses des mindestens einen Magneten (5) aufweist³, wobei der Grundkörper (2) des Gebläserads (1) eine erste Seite (9) und eine zweite Seite (10) besitzt, und wobei auf der zweiten Seite (10) Strömungsleitelemente (11) angeordnet sind⁴,
**dadurch gekennzeichnet, dass** der Trägheitsring (6) radial außerhalb des Rückschlussrings (7) angeordnet ist⁵, dass der Rotor (3) einen Befestigungsring (32)
¹ Beschreibung S. 10, 11-13 und S. 12, Z. 6
² Beschreibung S. 10, Z. 13-14
³ Ursprünglicher Anspruch 2
⁴ Ursprünglicher Anspruch 6
⁵ Ursprünglicher Anspruch 3 umfasst⁶, dass der Rückschlussring (7) und der mindestens eine Magnet (5) am Befestigungsring (32) gehalten sind⁷, dass der Grundkörper (2) an einer Seite (9) eine ringförmig um die Drehachse (100) verlaufende Ringwand (8) aufweist, dass die Ringwand (8) den Trägheitsring (6) von dem mindestens einen Magneten (5) trennt⁸, und dass der Befestigungsring (32) an der Ringwand (8) anliegt⁹.
⁶ Beschreibung S. 12, Z. 6
⁷ Beschreibung S. 11, Z. 15-16
⁸ Beschreibung S. 3, Z. 16-19
⁹ Beschreibung S. 23, Z. 24-25

2. Gebläserad nach Anspruch 1,
**dadurch gekennzeichnet, dass** der Trägheitsring (6) auf der ersten Seite (10) des Gebläserads (1) angeordnet ist.

3. Gebläserad nach Anspruch 1 oder 2,
**dadurch gekennzeichnet, dass** die Strömungsleitelemente (11) in einem Kreisringbereich (K) des Grundkörpers (2) angeordnet sind, dass ein Mittelpunkt (M) des Kreisringbereichs (K) auf der Drehachse (100) liegt, dass ein innerer Radius (rik) des Kreisringbereichs (K) höchstens dem 0,5fachen des Außenradius (rag) des Grundkörpers (2) entspricht, und dass ein äußerer Radius (rak) des Kreisringbereichs (K) mindestens dem 0,9fachen des Außenradius (rag) des Grundkörpers (2) entspricht.

4. Gebläserad nach einem der Ansprüche 1 bis 3,
**dadurch gekennzeichnet, dass** der Grundkörper (2)eine gedachte Abschlussebene (E) besitzt, die senkrecht zur Drehachse (100) steht, dass die Abschlussebene (E) auf der ersten Seite (9) des Grundkörpers (2) angeordnet ist, dass die Abschlussebene (E) durch die in axialer Richtung äußerste Begrenzung des Grundkörpers (2) verläuft, dass der Grundkörper (2) an der zweiten Seite (10) des Grundkörpers (2) eine Strömungsleitfläche (12) besitzt, und dass ein Abstand (a1, a2) der Strömungsleitfläche (12) von der Abschlussebene (E) mit sich verringerndem Abstand (b1, b2) der Strömungsleitfläche (12) zur Drehachse (100) zunimmt.

5. Gebläserad nach Anspruch 4,
**dadurch gekennzeichnet, dass** die Kontur des Trägheitsrings (6) an der der Strömungsleitfläche (12) zugewandten Seite der Kontur der Strömungsleitfläche (12) folgt.

6. Gebläserad nach einem der Ansprüche 1 bis 5,
**dadurch gekennzeichnet, dass** zwischen der ersten Seite (9) und der zweiten Seite (10) des Grundkörpers (2) eine Trennwand (14) angeordnet ist, und dass der Trägheitsring (6) benachbart zu der Trennwand (14) angeordnet ist.

7. Gebläserad nach Anspruch 6,
**dadurch gekennzeichnet, dass** die Strömungsleitfläche (12) zumindest teilweise von der Trennwand (14) des Grundkörpers (2) gebildet ist.

8. Gebläserad nach Anspruch 6 oder 7,
**dadurch gekennzeichnet, dass** eine Kontur der Trennwand (14) auf der ersten Seite (9) des Grundkörpers (2) einer Kontur der Strömungsleitfläche (12) auf der zweiten Seite (10) des Grundkörpers (2) folgt.

9. Gebläserad nach einem der Ansprüche 1 bis 8,
**dadurch gekennzeichnet, dass** der Trägheitsring (6) mindestens einen Abschnitt besitzt, in dem eine in Richtung der Drehachse (100) gemessene Stärke (s1, s2) des Trägheitsrings (6) radial nach außen hin abnimmt.

10. Gebläserad nach einem der Ansprüche 1 bis 9,
**dadurch gekennzeichnet, dass** der Trägheitsring (6) am Grundkörper (2) mit Klebstoff (17) befestigt ist.

11. Arbeitsgerät mit einem Verbrennungsmotor (19) und mit einem Gebläserad (1) nach einem der Ansprüche 1 bis 10.

## Claims

1. Fan impeller, comprising a base body (2) with an axis of rotation (100), wherein the fan impeller (1) has a rotor (3) of a generator (4), wherein the rotor (3) is fixed to the base body (2) of the fan impeller (1), wherein the rotor (3) comprises a metallic inference ring (7) and at least one magnet (5), wherein the at least one magnet (5) is arranged on the inference ring (7), wherein an inertia ring (6) is fixed to the base body (2) of the fan impeller (1) at a distance (d) from the at least one magnet (5), wherein the density of the material of the inertia ring (6) is greater than the density of the material of the base body (2) of the fan impeller (1), wherein the fan impeller (1) has, in addition to the inertia ring (6), the metallic inference ring (7) for boosting the magnetic flux of the at least one magnet (5), wherein the base body (2) of the fan impeller (1) has a first side (9) and a second side (10), and wherein flow guidance elements (11) are arranged on the second side (10),
**characterised in that** the inertia ring (6) is located radially outside the inference ring (7), **in that** the rotor (3) comprises a fastening ring (32), **in that** the inference ring (7) and the at least one magnet (5) are held on the fastening ring (32), **in that** the base body (2) has an annular wall (8) extending in an annular fashion about the axis of rotation (100) on one side (9), **in that** the annular wall (8) separates the inertia ring (6) from the at least one magnet (5), and **in that** the fastening ring (32) butts against the annular wall (8).

2. Fan impeller according to claim 1,
**characterised in that** the inertia ring (6) is located on the first side (10) of the fan impeller (1).

3. Fan impeller according to claim 1 or 2,
**characterised in that** the flow guidance elements (11) are located in an annulus region (K) of the base body (2), **in that** a centre (M) of the annulus region (K) lies on the axis of rotation (100), **in that** an inner radius (rik) of the annulus region (K) is no more than 0.5 times the outer radius (rag) of the base body (2), and **in that** an outer radius (rak) of the annulus region (K) is at least 0.9 times the outer radius (rag) of the base body (2).

4. Fan impeller according to any of claims 1 to 3,
**characterised in that** the base body (2) has a notional end plane (E), which is perpendicular to the axis of rotation (100), **in that** the end plane (E) is located on the first side (9) of the base body (2), **in that** the end plane (E) extends through that boundary of the base body (2) which is the outermost in the axial direction, **in that** the base body (2) has a flow guidance surface (12) on the second side (10) of the base body (2), and **in that** a distance (a1, a2) between the flow guidance surface (12) and the end plane (E) increases as the distance (b1, b2) between the flow guidance surface (12) and the axis of rotation (100) decreases.

5. Fan impeller according to claim 4,
**characterised in that** the contour of the inertia ring (6) follows the contour of the flow guidance surface (12) on the side facing the flow guidance surface (12).

6. Fan impeller according to any of claims 1 to 5,
**characterised in that** a partition (14) is located between the first side (9) and the second side (10) of the base body (2), and **in that** the inertia ring (6) is located adjacent to the partition (14).

7. Fan impeller according to Claim 6,
**characterised in that** the flow guidance surface (12) is at least partially represented by the partition (14) of the base body (2).

8. Fan impeller according to Claim 6 or 7,
**characterised in that** a contour of the partition (14) on the first side (9) of the base body (2) follows a contour of the flow guidance surface (12) on the second side (10) of the base body (2).

9. Fan impeller according to any of claims 1 to 8,
**characterised in that** the inertia ring (6) has at least one section in which a thickness (s1, s2) of the inertia ring (6) as measured in the direction of the axis of rotation (100) decreases radially towards the outside.

10. Fan impeller according to any of claims 1 to 9,
**characterised in that** the inertia ring (6) is secured to the base body (2) by adhesive (17).

11. Working implement with an internal combustion engine (19) and a fan impeller (1) according to any of claims 1 to 10.

## Revendications

1. Roue de ventilateur comprenant un corps de base (2) avec un axe de rotation (100), dans laquelle la roue de ventilateur (1) comporte un rotor (3) d'un générateur (4), dans laquelle le rotor (3) est fixé au corps de base (2) de la roue de ventilateur (1), dans laquelle le rotor (3) comprend un anneau de reflux métallique (7) et au moins un aimant (5), dans laquelle l'au moins un aimant (5) est disposé sur l'anneau de reflux métallique (7), dans laquelle un anneau d'inertie (6) est fixé au corps de base (2) de la roue de ventilateur (1) à une distance (d) de le au moins un aimant (5), dans laquelle la densité du matériau de l'anneau d'inertie (6) est supérieure à la densité du matériau du corps de base (2) de la roue de ventilateur (1), dans laquelle la roue de ventilateur (1) comporte, en plus de l'anneau d'inertie (6), l'anneau de reflux métallique (7) pour amplifier le flux magnétique du au moins un aimant (5), dans laquelle le corps de base (2) de la roue de ventilateur (1) a un premier coté (9) et un deuxième côté (10), et dans laquelle des éléments guides d'écoulement (11) sont disposés sur le deuxième côté (10),
**caractérisée en ce que** l'anneau d'inertie (6) est disposé radialement à l'extérieur de l'anneau de reflux métallique (7), **en ce que** le rotor (3) comprend un anneau de fixation (32), **en ce que** l'anneau de reflux métallique (7) et l'au moins un aimant (5) sont maintenus sur l'anneau de fixation (32), **en ce que** le corps de base (2) comporte sur un côté (9) une paroi annulaire (8) qui s'étend en forme d'anneau autour de l'axe de rotation (100), **en ce que** la paroi annulaire (8) sépare l'anneau d'inertie (6) de l'au moins un aimant (5), et **en ce que** l'anneau de fixation (32) s'applique sur la paroi annulaire (8).

2. Roue de ventilateur selon la revendication 1,
**caractérisée en ce que** l'anneau d'inertie (6) est disposée sur le premier côté (10) de la roue de ventilateur (1).

3. Roue de ventilateur selon la revendication 1 ou 2,
**caractérisé en ce que** les éléments guides d'écoulement (11) sont disposés dans une zone d'anneau circulaire (K) du corps de base (2), **en ce qu'**un centre (M) de la zone d'anneau circulaire (K) est situé sur l'axe de rotation (100), **en ce qu'**un rayon intérieur (rik) de la zone d'anneau circulaire (K) correspond au plus à 0,5 fois le rayon extérieur (rag) du corps de base (2), et **en ce qu'**un rayon extérieur (rak) de la zone d'anneau circulaire (K) correspond au moins à 0,9 fois le rayon extérieur (rag) du corps de base (2).

4. Roue de ventilateur selon l'une des revendications 1 à 3,
**caractérisée en ce que** le corps de base (2) a un plan de terminaison imaginaire (E) qui est perpendiculaire à l'axe de rotation (100), **en ce que** le plan de terminaison (E) est disposé sur le premier côté (9) du corps de base (2), **en ce que** le plan de terminaison (E) s'étend à travers la limitation la plus à l'extérieur, dans la direction axiale, du corps de base (2), **en ce que** le corps de base (2) a sur le deuxième côté (10) du corps de base (2) une surface guide d'écoulement (12), et **en ce qu'**un écartement (a1, a2) de la surface guide d'écoulement (12) par rapport au plan de terminaison (E) augmente avec un écartement (b1, b2) décroissant de la surface guide d'écoulement (12) par rapport à l'axe de rotation (100).

5. Roue de ventilateur selon la revendication 4,
**caractérisée en ce que** le contour de l'anneau d'inertie (6), sur le côté tourné vers la surface guide d'écoulement (12), suit le contour de la surface guide d'écoulement (12).

6. Roue de ventilateur selon l'une des revendications 1 à 5,
**caractérisée en ce qu'**une cloison (14) est disposée entre le premier côté (9) et le deuxième côté (10) du corps de base (2), et **en ce que** l'anneau d'inertie (6) est disposé près de la cloison (14).

7. Roue de ventilateur selon la revendication 6,
**caractérisée en ce que** la surface guide d'écoulement (12) est formée au moins partiellement par la cloison (14) du corps de base (2).

8. Roue de ventilateur selon la revendication 6 ou 7,
**caractérisée en ce qu'**un contour de la cloison (14) sur le premier côté (9) du corps de base (2) suit un contour de la surface guide d'écoulement (12) sur le deuxième côté (10) du corps de base (2).

9. Roue de ventilateur selon l'une des revendications 1 à 8,
**caractérisée en ce que** l'anneau d'inertie (6) a au moins une section dans laquelle une épaisseur (s1, s2) de l'anneau d'inertie (6) mesurée dans la direction de l'axe de rotation (100) diminue radialement vers l'extérieur.

10. Roue de ventilateur selon l'une des revendications 1 à 9,
**caractérisée en ce que** l'anneau d'inertie (6) est fixé au corps de base (2) avec de la colle (17).

11. Appareil de travail avec un moteur à combustion interne (19) et avec une roue de ventilateur (1) selon l'une des revendications 1 à 10.
